# EUROPÄISCHE PATENTANMELDUNG

(11) **EP 1 798 891 A1**
(43) Veröffentlichungstag der Anmeldung: **20.06.2007**
(21) Anmeldenummer: 05112020.2
(22) Anmeldetag: 13.12.2005
(51) Int. Cl.: H04L 12/24, H04L 29/06

(54) **Verfahren und Netzmanagementsystem zur Dienst-orientierten Planung und Erweiterung eines Kommunikationsnetzes**

(71) Anmelder: SIEMENS AKTIENGESELLSCHAFT, 80333 München (DE)
(72) Erfinder: Frantz, Michael, 81737, München (DE)
(74) Vertreter: Berg, Peter

(57) **Zusammenfassung**

Die Erfindung betrifft ein Verfahren zur Dienst-orientierten Planung und Erweiterung eines Kommunikationsnetzes, welches Netzelemente, Verbindungen zwischen den Netzelementen sowie ein Netzmanagementsystem (NMS) umfasst, welches zur Administration und Konfiguration der Netzelemente, der Verbindungen und der Dienste sowie zur Durchführung des erfindungsgemäßen Verfahrens eingerichtet ist. Bei diesem Kommunikationsnetz wird ein neuer Dienst mit allen dafür notwendigen Daten im Netzmanagementsystem (NMS) definiert (2). Nach Definition eines neuen Dienstes (2) wird auf Basis eines Modells des bereits installierten Kommunikationsnetzes und anhand von für eine Erweiterung des Kommunikationsnetzes definierten Regeln geprüft (3), ob eine Ausführung des neuen Dienstes im Kommunikationsnetz möglich ist. Wird festgestellt, dass der neue Dienst im bereits installierten Kommunikationsnetz nicht ausgeführt werden kann, so wird vom Netzmanagementsystem (NMS) ein um die für die Ausführung des neuen Dienstes notwendigen Netzelemente, Netzelementkomponenten oder Verbindungen erweitertes Modell des Kommunikationsnetzes generiert (4), anhand dessen das installierte Kommunikationsnetz für den neuen Dienst ausgebaut werden kann. Dieses erweiterte Modell des Kommunikationsnetzes wird dann vom Netzmanagementsystem (NMS) dargestellt (5), wodurch ein zeitaufwendiger, sonst manuell vorzunehmender Netzplanungsprozess wesentlich vereinfacht und beschleunigt wird.

## Beschreibung

Die Erfindung betrifft ein Verfahren zur Dienst-orientierten Planung und Erweiterung eines Kommunikationsnetzes, welches Netzelemente, Verbindungen zwischen den Netzelementen sowie ein Netzmanagementsystem umfasst und bei welchem ein neuer Dienst mit allen dafür notwendigen Daten im Netzmanagementsystem definiert wird. Dabei ist das Netzmanagementsystem zur Administration und Konfiguration der Netzelemente, der Verbindungen und der Dienste sowie außerdem zur Durchführung des erfindungsgemäßen Verfahrens eingerichtet.

Ein Kommunikationsnetz wird definitionsgemäß als Oberbegriff für alle Ressourcen verstanden, durch welche voneinander entfernte Netzzugangspunkte verbunden werden und von welchen diesen Dienste mit Dienstmerkmalen zu Kommunikationszwecken und zum Übertragen von Daten zur Verfügung gestellt werden.

Ein Kommunikationsnetz umfasst typischerweise eine Vielzahl von verschiedenen Netzelementen bzw. Netzelement-Typen - wie beispielsweise Switches, Router, Bridges, Hubs, Gateways, etc. Diese Netzelemente sind mittels (physikalischer) Verbindung miteinander verbunden, über welche je nach Konfiguration des Kommunikationsnetzes mit verschiedenen Kapazitäten und unterschiedlicher Bandbreite Daten zwischen den Netzelementen ausgetauscht werden.

Zusätzlich kann jedes Netzelement auch so genannte Netzelementkomponenten wie z.B. Prozessoren, Netzwerkkarten für Herstellung einer physikalischen Verbindung zum Netz über ein geeignetes Zugriffsverfahren, Ports zum Verbinden von Netzelementen untereinander oder zum Anschluss von Endgeräten an das Netzelement umfassen. Die Anzahl sowie die Konfiguration dieser Netzelementkomponenten wird beispielsweise vom Typ des jeweiligen Netzelements, die im Kommunikationsnetz angebotenen Diensten, die geforderten Dienstgüte bzw. Quality of Service, die geforderte Verfügbarkeit des Kommunikationsnetzes, etc. bestimmt.

Planung, Aufbau und Dimensionierung eines Kommunikationsnetzes wird mit Hilfe von Methoden der Verkehrstheorie durchgeführt. Von der Verkehrstheorie, die eine Unterdisziplin der Nachrichten- und Vermittlungstechnik darstellt, werden ursprüngliche Eigenschaften von Datenverkehr in einem Kommunikationsnetz (z.B. Wartezeiten, Bedienzeiten, Verlusten, Gesprächsdauer, Übertragungsdauer und deren statischer Verteilung, etc.) sowie deren Beeinflussung durch vermittlungs- und netztechnische Einrichtungen (d.h. mit den vom Datenverkehr in Anspruch genommenen Ressourcen wie z.B. Netzelementen und Verbindungen) behandelt, wobei der Datenverkehr in einem Kommunikationsnetz z.B. von der Anzahl der Benutzer sowie von den angebotenen Diensten abhängig ist.

Betrieb und Wartung von Kommunikationsnetzen, insbesondere von großen Telekommunikationsnetzen oder Computernetzwerken, wird mit Systemen zum Netzmanagement oder so genannten Netzmanagementsystemen vorgenommen, wobei als Netzmanagement definitionsgemäß der Oberbegriff für das Management von Netzelemente sowie den zugehörigen Netzelementkomponenten, von Verbindungen zwischen den Netzelementen und von Diensten in einem Kommunikationsnetz bezeichnet wird.

Vom Netzmanagementsystem werden Funktionen wie z.B. die anfängliche Planung des Kommunikationsnetzes, die Vorherbestimmung der Datenverkehrslenkung, das Konfigurationsmanagement, das Fehlermanagement und das Sicherheitsmanagement, das kontinuierlichen Abfragen des Status der Netzelemente, etc. für ein Kommunikationsnetz zur Verfügung gestellt. Mit Hilfe des Netzmanagementsystems ist es auch möglich, Dienste zu Kommunikationszwecken oder zum Übertragen von Daten einzurichten, von denen mehrere Netzelemente in Anspruch genommen werden. Dazu kann das so genannte Elementmanagementsystem eingesetzt werden, mit dem entsprechende Attribute in jedem für den Dienst notwendigen Netzelement eingerichtet werden können. Das Elementmanagementsystem stellt dabei eine zusätzliche Komponente zum Netzmanagementsystem dar, mit dem die einzelnen Netzelement bzw. Netzelement-Typen konfiguriert und administriert werden können. Die Verbindungen zwischen den Netzelementen werden dann mit dem Netzmanagementsystem eingerichtet und verwaltet.

Daten über die physikalisch verfügbaren Ressourcen (Netzelement bzw. Verbindungen) sowie ihre Konfiguration werden z.B. vom Netzmanagementsystem entweder automatisch erlernt oder in das Netzmanagementsystem eingegeben, um dort in beispielsweise einer Netzmanagementsystem-internen Datenbank gespeichert zu werden. Auf diese Weise sind dem Netzmanagementsystem alle Netzelement sowie die gesamte Topologie des installierten Kommunikationsnetzes bekannt.

Auf Basis der im Netzmanagementsystem vorhandenen Daten von Netzelementen und von der Topologie des Kommunikationsnetzes kann vom Netzmanagementsystem ein Modell des installierten Kommunikationsnetzes generiert werden. Durch dieses Modell werden dann beispielsweise die Konfiguration des Kommunikationsnetzes sowie die Überwachung des Kommunikationsnetzes vereinfacht.

Auch für die Konfiguration von Diensten zu Kommunikationszwecken oder von Diensten zum Übertragen von Daten kann das Modell des Kommunikationsnetzes verwendet werden. Denn von manchen Netzmanagementsystemen kann beispielsweise das installierte Kommunikationsnetz mit seinen Netzelementen und Verbindungen anhand dieses Modells dargestellt werden.

Dadurch wird es z.B. auch möglich, das Modell für die Konfiguration eines neuen Dienstes einzusetzen. Für das Einrichten dieses Dienstes können dann z.B. im vom Netzmanagementsystem dargestellten Modell des installierten Kommunikationsnetzes jene Netzelemente und Verbindungen auszuwählen, die vom Dienst benutzt werden und auf diese Weise alle für den Dienst notwendigen Daten im Netzmanagementsystem definiert werden.

Durch Einführung neuer Dienste zu Kommunikationszwecken oder für die Übertragung von Daten bzw. durch eine steigende Zahl von Benutzer kann z.B. eine Erweiterung des Kommunikationsnetzes mit neuen Ressourcen (Netzelemente, Netzelementkomponenten oder Verbindungen) notwendig werden, damit vom Kommunikationsnetz die geforderte Verfügbarkeit und Dienstgüte bzw. Quality of Service zur Verfügung gestellt wird. Insbesondere bei Kommunikationsnetzen wie z.B. Carrier grade Ethernet Networks, SDH-Netzen oder ATM-Netzen, von denen eine sehr hohe Verfügbarkeit gefordert wird, ist es wichtig, jene Ressourcen (Netzelemente, Netzelementkomponenten oder Verbindungen) zu identifizieren, um welche das Kommunikationsnetz bei Einführung eines neuen Dienstes erweitert werden muss.

Netzmanagementsysteme können zwar für die Definition von neuen Diensten eingesetzt werden, welche auch dann möglich ist, wenn beispielsweise nicht alle für einen neuen Dienst notwendigen Ressourcen (Netzelemente, Netzelementkomponenten oder Verbindungen) im installierten Kommunikationsnetz vorhanden sind. Da aber das von ihnen dargestellte Modell des installierten Kommunikationsnetzes auf beispielsweise in einer Netzmanagementsystem-internen Datenbank gespeicherten Daten der Ressourcen (Netzelemente, Netzelementkomponenten oder Verbindungen) basiert - also ein statisches Modell ist, kann bei der Definition eines neuen Dienstes meist keine Information vom Netzmanagementsystem zur Verfügung gestellt werden, ob zusätzliche Ressourcen (Netzelemente, Netzelementkomponenten oder Verbindungen) im Kommunikationsnetz für den neuen Dienst notwendig sind oder nicht.

Die Einführung und Aktivierung eines neuen Dienstes (d.h. die Konfiguration des Dienstes im installierten Kommunikationsnetz) wird dann meist zu einem späteren Zeitpunkt durchgeführt, nachdem z.B. alle notwendigen Ressourcen im Kommunikationsnetz installiert worden sind. Diese neuen, zusätzlichen Ressourcen (Netzelemente, Netzelementkomponenten oder Verbindungen) werden meist z.B. durch Zeit aufwendige Netzplanung, die in der Regel offline durchgeführt wird, identifiziert und zu spezifiziert. Die Daten der im Netzplanungsprozess identifizierten, zusätzlichen Ressourcen müssen dann zusätzlich z.B. händisch in das Netzmanagementsystem eingetragen werden, damit diese neuen Ressourcen, welche meist erst vor der Aktivierung des neuen Dienstes im Kommunikationsnetz installiert werden, zumindest im vom Netzmanagementsystem dargestellten Modell des Kommunikationsnetzes angezeigt werden und damit für den neuen Dienst verfügbar sind.

Der vorliegenden Erfindung liegt daher die Aufgabe zugrunde, ein Verfahren sowie ein Netzmanagementsystem anzugeben, durch welche nach der Definition eines neuen Dienstes automatisch festgestellt wird, welche zusätzlichen Ressourcen (Netzelemente, Netzelementkomponenten oder Verbindungen) benötigt werden, um das Kommunikationsnetz für die Durchführung des neuen Dienstes entsprechend zu erweitern.

Die Lösung der Aufgabe erfolgt durch ein Verfahren der eingangs angeführten Art, wobei nach Definition eines neuen Dienstes auf Basis eines Modells des bereits installierten Kommunikationsnetzes im Netzmanagementsystem und anhand von für eine Erweiterung des Kommunikationsnetzes definierten Regeln geprüft wird, ob eine Ausführung des neuen Dienstes im Kommunikationsnetz möglich ist, dann das ein um die für die Ausführung des neuen Dienstes notwendigen Netzelemente, Netzelementkomponenten oder Verbindungen erweitertes Modell des Kommunikationsnetzes generiert wird, anhand dessen das installierte Kommunikationsnetz für den neuen Dienst ausgebaut werden kann, und dieses erweiterte Modell des Kommunikationsnetzes dann dargestellt wird.

Der Hauptaspekt der erfindungsgemäß vorgeschlagenen Lösung besteht darin, dass ausgehend vom Modell des bereits installierten Kommunikationsnetzes und auf Basis von für die Erweiterung definierten Regeln vom Netzmanagementsystem automatisch geprüft wird, ob ein neuer Dienst im Kommunikationsnetz ausgeführt werden kann oder nicht. Wird dabei festgestellt, dass eine Erweiterung des Kommunikationsnetzes notwendig ist, so wird vom Netzmanagementsystem ein um einen möglichen Kommunikationsnetz-Ausbau erweitertes Modell generiert und dargestellt. Dadurch wird der Netzplanungsprozess auf einfache Weise verkürzt und vereinfacht, da im erweiterten Modell z.B. die für den neuen Dienst notwendigen Änderungen der Topologie des Kommunikationsnetzes oder notwendige Erweiterungen mit neuen Netzelementen oder Netzelementkomponenten ersichtlich sind. Zusätzlich kann durch das erfindungsgemäße Verfahren die Planung von Erweiterungen des Kommunikationsnetzes auf vorteilhafte Weise optimiert werden, da die entsprechende Konfiguration des Kommunikationsnetzes auf Basis des gespeicherten Modells ermitteln wird und im Netzmanagementsystem verfügbar ist

Es ist günstig, wenn als definierte Regeln für die Erweiterung des Kommunikationsnetzes Regeln für eine Konfiguration von neuen Netzelementen vorgegeben werden, weil bei der Ermittlung des erweiterten Modells des Kommunikationsnetzes auch gleich die Konfiguration für neue Netzelemente bestimmt werden kann.

Es ist vorteilhaft, wenn als definierte Regeln für die Erweiterung des Kommunikationsnetzes Regeln für eine Ausrüstung von Netzelementen mit neuen Netzelementkomponenten vorgegeben werden, weil bei der Ermittlung des erweiterten Modells des Kommunikationsnetzes auch gleich eventuell notwendige Änderungen der Konfiguration von Netzelementen (z.B. Austausch von Netzelementkomponenten - wie beispielsweise Ersatz einer Netzwerkkarte durch eine schnellere Netzwerkkarte oder durch eine mit mehr Anschlussmöglichkeiten, Einbau weiterer Netzelementkomponenten, etc.) angezeigt werden können.

Des weiteren empfiehlt sich, wenn definierte Regeln für die Erweiterung des Kommunikationsnetzes Regeln für die Verbindungen zwischen den Netzelementen vorgegeben werden, da damit auf einfache Weise festgestellt werden kann, ob beispielsweise zwischen Netzelementen neue Verbindungen eingefügt werden können - d.h. ob beispielsweise von den Netzelementen über die für die neue Verbindung notwendigen Anschlussmöglichkeiten verfügt wird.

Eine zweckmäßige Weiterbildung der Erfindung sieht vor, dass automatisch ein Arbeitsauftrag für die notwendigen Erweiterungen des Kommunikationsnetzes anhand des erweiterten Modells des Kommunikationsnetzes erstellt wird, da damit auf Basis der im Netzmanagement festgestellten Erweiterungen, die auch bereits in z.B. der Netzmanagement-internen Datenbank gespeichert werden, in zeitsparender Weise Arbeitsaufträge für Installationen bzw. Änderungen von Netzelementen oder Verbindungen im Kommunikationsnetz generiert werden.

Bei einer bevorzugten Fortbildung der Erfindung wird jedes für die Durchführung des neuen Dienstes geeignete, erweiterte Modell des Kommunikationsnetzes dargestellt, wodurch auf vorteilhafte Weise alle Erweitungsmöglichkeiten und damit die günstigste Ausbaumöglichkeit für das Kommunikationsnetz ohne zeitaufwendigen, manuellen Netzplanungsprozess festgestellt werden können.

Es ist vorteilhaft, wenn bei Vorhandensein aller für die Durchführung des neuen Dienstes notwendigen Netzelemente, Netzelementkomponenten oder Verbindungen zwischen den Netzelementen der neue Dienst automatisch eingerichtet und aktiviert wird, weil damit mehrfache Eingaben von Konfigurations- und Routing-Daten für die Definition des Dienstes wegfallen. Denn der neue Dienst kann auf Basis der im Netzmanagementsystem eingegebenen Daten sofort eingerichtet und aktiviert werden, sobald feststeht, dass alle für den Dienst notwendigen Ressourcen im Kommunikationsnetz installiert und damit physikalisch verfügbar sind.

Zusätzlich erfolgt die Lösung der Aufgabe auch durch ein Netzmanagementsystem zur Administration und Konfiguration der Netzelemente, der Verbindungen und der Dienste, welches zusätzlich zur Durchführung des erfindungsgemäßen Verfahrens eingerichtet ist und daher Mittel für eine Prüfung auf Basis eines Modells des bereits installierten Kommunikationsnetzes, Mittel für eine Prüfung anhand definierter Regeln für die Erweiterung des Kommunikationsnetzes, Mittel zum Generieren eines um die für die Ausführung des neuen Dienstes notwendigen Netzelemente, Netzelementkomponenten oder Verbindungen erweiterten Modells des Kommunikationsnetzes, anhand dessen das installierte Kommunikationsnetz für den neuen Dienst ausgebaut werden kann, und Mittel zur Darstellung jedes für die Durchführung des neuen Dienstes geeigneten, erweiterten Modell des Kommunikationsnetzes umfasst.

Bei dieser Ausbildung des Netzmanagementsystems ergibt sich eine Verbesserung, dass auf Basis der im Netzmanagementsystem vorhandenen Daten (z.B. Modell des installierten Kommunikationsnetzes, Definition des neuen Dienstes) automatisch festgestellt werden kann, ob der neue Dienst vom installierten Kommunikationsnetz ausgeführt werden kann. Zusätzlich werden für den Dienst notwendige Erweiterungen erkannt und in Form eines erweiterten Modells des Kommunikationsnetzes angezeigt, wodurch der Netzplanungsprozess wesentlich vereinfacht wird.

Weiters ist es vorteilhaft, wenn Mittel für die Eingabe und Speicherung der definierten Regeln für die Erweiterung des Kommunikationsnetzes vorgesehen sind, weil dadurch auf einfache Weise die Regeln im Netzmanagement definiert und angepasst werden können, wenn beispielsweise neue Netzelemente, Netzelementkomponenten oder Verbindungen im Kommunikationsnetz ergänzt werden.

Es ist außerdem günstig, wenn Mittel für eine automatische Erstellung von Arbeitsaufträgen für die notwendigen Erweiterungen des Kommunikationsnetzes anhand des erweiterten Modells des Kommunikationsnetzes sowie Mittel für ein automatisches Einrichten des neuen Dienstes vorgesehen sind, weil dadurch Arbeitsaufträge zum Ausbau des Kommunikationsnetz auf einfache Weise aus dem ermittelten, erweiterten Modell des Kommunikationsnetzes abgeleitet werden können und dann nach erfolgter Umsetzung der Erweiterungen im Kommunikationsnetz der neue Dienst sofort eingerichtet werden kann. Dadurch ist auch eine neuerliche Eingabe der Definition des neuen Dienstes in das Netzmanagementsystem nach der Installation von z.B. neuen Netzelementen, Netzelementkomponenten oder Verbindungen - sofern eine Erweiterung für den neuen Dienst überhaupt notwendig ist - nicht mehr nötig.

Die Erfindung wird nachfolgend in beispielhafter Weise unter Bezugnahme auf die beigefügten Figuren näher erläutert. Es zeigen:
- Fig. 1: eine schematische Darstellung eines Netzmanagementsystems zur Durchführung des erfindungsgemäßen Verfahrens
- Fig. 2: den schematischen Ablauf des erfindungsgemäßen Verfahrens zur Dienst-orientierten Planung und Erweiterung eines Kommunikationsnetzes

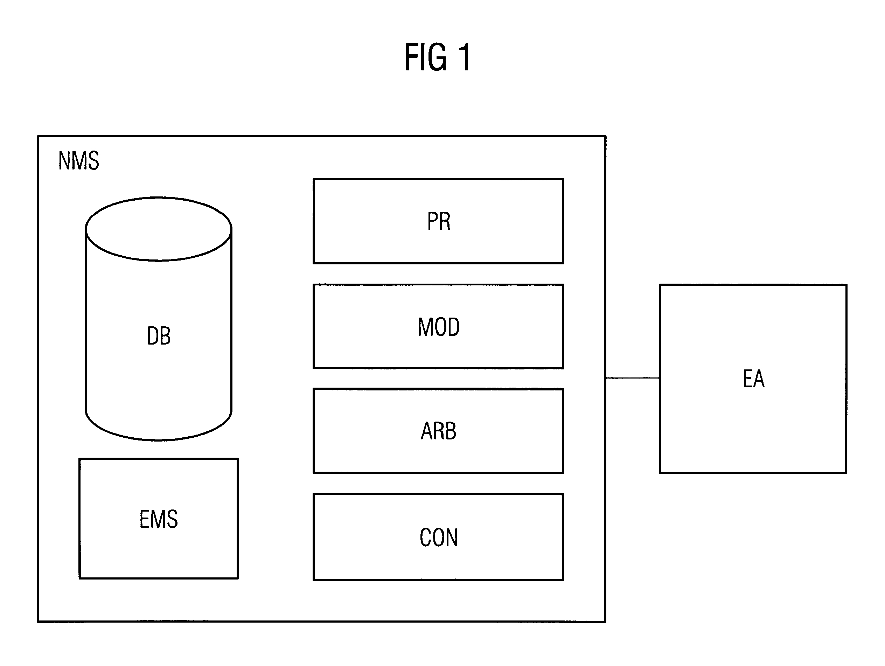

Figur 1 zeigt schematisch die funktionelle Struktur eines Netzmanagementsystems NMS zur Durchführung des erfindungsgemäßen Verfahrens, wobei nur jene funktionellen Komponenten dargestellt sind, die für die Ausführung des erfindungsgemäßen Verfahrens eingesetzt werden.

Das Netzmanagementsystem NMS umfasst neben anderen nicht explizit dargestellten, funktionellen Komponenten wie beispielsweise Konfigurationsmanagement, Sicherheitsmanagement, Fehlermanagement, Abfrage der Netzelementestati, etc. ein Elementmanagementsystem EMS, mit dessen Hilfe einzelne Netzelemente konfiguriert und verwaltet werden können.

Die mittels Elementmanagementsystem EMS definierte Konfiguration einzelner Netzelemente wird in einer Datenbank DB des Netzmanagementsystems gespeichert. In dieser Datenbank DB sind neben den Daten der physikalisch vorhandenen Netzelemente auch Daten über die Verbindungen zwischen den Netzelementen sowie die Konfiguration von Netzelementen und Verbindungen hinterlegt. Diese Daten werden entweder vom Netzmanagementsystem NMS gelernt oder über die Ein-/Ausgabeeinheit EA eingegeben.

Über die Ein-/Ausgabeeinheit EA werden auch alle notwendigen Daten - wie beispielsweise benötigte Bandbreite, Routing-Optionen, etc. für einen neuen Dienst eingegeben.

Um die Ausführbarkeit des neuen Dienstes im installierten Kommunikationsnetz zu prüfen, wird vom Netzmanagementsystem NMS eine Prüfungseinheit PR zur Verfügung gestellt. Von dieser Prüfungseinheit PR wird auf Basis eines Modells des bereits installierten Kommunikationsnetzes und anhand von für eine Erweiterung des Kommunikationsnetzes definierter Regeln überprüft, ob die für den Dienst notwendigen Ressourcen verfügbar sind. Die definierten Regeln für die Erweiterung des Kommunikationsnetzes werden ebenfalls über die Ein-/Ausgabeeinheit EA eingegeben und in der Datenbank DB gespeichert.

Das Modell des bereits installierten Kommunikationsnetzes wird auf Basis der in der Datenbank DB des Netzmanagementsystems NMS gespeicherten Daten von Netzelementen und von der Topologie des Kommunikationsnetzes von einer Modellgenerierungseinheit MOD generiert. Mit Hilfe dieser Modellgenerierungseinheit MOD wird auch das um die für die Ausführung des neuen Dienstes notwendigen Netzelemente, Netzelementkomponenten oder Verbindungen erweiterte Modell des Kommunikationsnetzes erstellt. Für die Darstellung des Modells und zur Anzeige der für den neuen Dienst möglichen Erweiterungsvarianten des Kommunikationsnetzes wird wieder die Ein-/Ausgabeeinheit EA herangezogen.

Für die Erstellung der Arbeitsaufträge für die notwendigen Erweiterung des Kommunikationsnetzes umfasst das Netzmanagementsystem NMS eine Auftragserstellungseinheit ARB.

Weiters ist im Netzmanagementsystem NMS eine Diensteinrichteeinheit CON vorgesehen, mittels welcher die Dienste automatisch eingerichtet und aktiviert werden, wenn aller für die Durchführung notwendigen Ressourcen (Netzelemente, Netzelementkomponenten und Verbindungen) im installierten Kommunikationsnetz vorhanden sind.

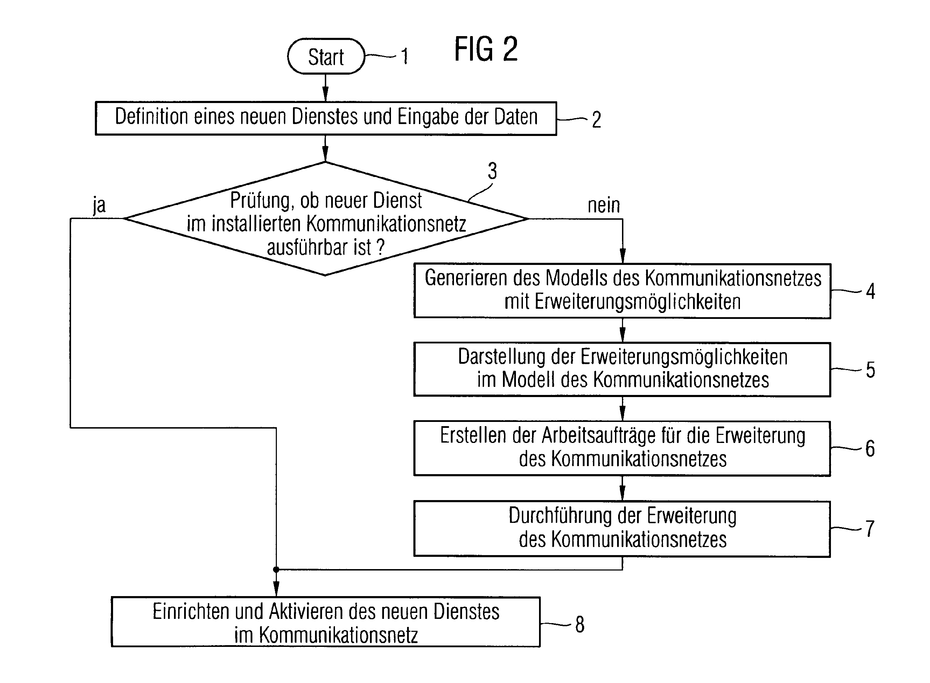

Figur 2 zeigt den schematischen Ablauf des erfindungsgemäßen Verfahrens zur Dienst-orientierten Planung und Erweiterung eines Kommunikationsnetzes.

Nach einem ersten Startschritt 1 wird in einem zweiten Schritt 2 ein neuer Dienst definiert und alle für diesen Dienst notwendigen Daten (z.B. benötigte Bandbreite, Routing-Optionen, etc.) über die Ein-/Ausgabeeinheit EA des Netzmanagementsystem NMS eingegeben. Nach der Eingabe der Daten wird in einem dritten Schritt 3 geprüft, ob der neue Dienst mit den im Kommunikationsnetz vorhanden Ressourcen ausgeführt werden kann. Dabei wird von der Prüfungseinheit PR auf Basis des Modells des installierten Kommunikationsnetzes zuerst überprüft, ob die notwendigen Ressourcen für den neuen Dienst verfügbar sind und ob die z.B. geforderte Bandbreite für den Dienst zur Verfügung gestellt werden kann.

Wird im dritten Schritt 3 festgestellt, dass alle notwendigen Ressourcen im installierten Netz vorhanden sind, so wird in einem letzten Schritt 8 der neue Dienst mit Hilfe des Netzmanagementsystems NMS automatisch eingerichtet und aktiviert.

Wird allerdings im dritten Schritt 3 festgestellt, dass der neue Dienst im bereits physikalisch vorhandenen Kommunikationsnetz nicht ausgeführt werden kann, so wird anhand von definierten Regeln von Netzmanagementsystem NMS geprüft, wie das Kommunikationsnetz für die Durchführung des Dienstes erweitert werden kann. Für die Erweiterung des Kommunikationsnetzes können beispielsweise folgende Regeln definiert werden:
- Erweiterung mit neuem Netzelement ist immer möglich
- Erweiterung durch neue Verbindung zwischen Netzelementen ist nur in Abhängigkeit vom Netzelement-Typ und von verfügbaren Verbindungsanschlüssen bei den Netzelement und den freien Verbindungen zwischen den Netzelementen - wie z.B. freien Glasfasern - möglich
- Einfügen neuer Netzelementkomponenten wie z.B. Netzkarten ist nur möglich, wenn noch freie Steckplätze im Netzelement vorhanden sind
- Austausch von Netzelementkomponenten - wie z.B. eine Netzkarte wie durch eine schnellere Netzkarte ersetzt - kann nur durchgeführt werden, wenn die neue Netzelementkomponente vom Netzelement unterstützt wird.

In einem vierten Schritt 4 werden dann von der Modellgenerierungseinheit MOD des Netzmanagementsystem NMS auf Basis des Modells des bereits installierten Kommunikationsnetz und unter Verwendung der definierten Regeln für eine Erweiterung des Kommunikationsnetzes die möglichen Erweiterungsvarianten zur Durchführung des neuen Dienstes ermitteln. Von der Modellgenerierungseinheit wird dann auch ein erweitertes Modell des Kommunikationsnetzes generiert, in dem die für den neuen Dienst notwendigen bzw. bei mehreren Varianten möglichen Erweiterungen - wie z.B. neue Netzelemente, neue Netzelementkomponenten, ausgetauschte Netzelementkomponenten oder neue Verbindungen zwischen Netzelementen - ersichtlich sind.

In einem fünften Schritt 5 wird dann das erweiterte Modell des Kommunikationsnetzes mit Hilfe der Ein-/Ausgabeeinheit EA des Netzmanagementsystems NMS ausgegeben und dargestellt, damit dann vom Benutzer die gewünschte Erweiterung des Kommunikationsnetzes ausgewählt werden kann. Wird vom Benutzer die vorgeschlagenen oder bei mehreren Variante eine bestimmte Erweiterungsmöglichkeit im erweiterten Modell des Kommunikationsnetzes gewählt, so werden die neuen Ressourcen (Netzelemente, Netzkomponenten, Verbindungen) automatisch im Netzmanagementsystem NMS mit den Status "geplant" hinterlegt. Vom Netzmanagementsystem NMS kann nun der neue Dienst im Status "geplant" der neue Dienst unter Verwendung von bereits installierten und den neu geplanten Ressourcen kreiert werden.

In einem sechsten Schritt 6 werden auf Basis des im erweiterten Modell ausgewählten Erweiterungsvorschlags für das Kommunikationsnetz von der Auftragserstellungseinheit ARB des Netzmanagementsystem NMS Arbeitsaufträge erstellt wie z.B. Bestellung bestimmter Netzelementkomponenten, Installationsaufträge für Netzelemente, etc.

In einem siebenten Schritt 7 werden dann die für die Erweiterungen des Kommunikationsnetzes durchgeführt. Nach Abschluss dieser Erweiterungen wird dann in einem achten und letzten Schritt 8 der neue Dienst im Kommunikationsnetz eingerichtet und aktiviert, wobei auch der Status des Dienstes sowie der neuen Ressourcen auf z.B. "installiert" gesetzt wird.

## Patentansprüche

**1.** Verfahren zur Dienst-orientierten Planung und Erweiterung eines Kommunikationsnetzes, welches Netzelemente, Verbindungen zwischen den Netzelementen sowie ein Netzmanagementsystem (NMS) zur Administration und Konfiguration der Netzelemente, der Verbindungen und der Dienste umfasst und bei welchem ein neuer Dienst mit allen dafür notwendigen Daten im Netzmanagementsystem (NMS) definiert wird (2), **dadurch gekennzeichnet, dass** nach Definition eines neuen Dienstes (2) auf Basis eines Modells des bereits installierten Kommunikationsnetzes im Netzmanagementsystem (NMS) und anhand von für eine Erweiterung des Kommunikationsnetzes definierten Regeln geprüft wird (3), ob eine Ausführung des neuen Dienstes im Kommunikations-netz möglich ist,
- dass dann das ein um die für die Ausführung des neuen Dienstes notwendigen Netzelemente, Netzelementkomponenten oder Verbindungen erweitertes Modell des Kommunikationsnetzes generiert wird (4), anhand dessen das installierte Kommunikationsnetz für den neuen Dienst ausgebaut werden kann,
- und dass dieses erweiterte Modell des Kommunikationsnetzes dargestellt wird (5).

**2.** Verfahren nach Anspruch 1 **dadurch gekennzeichnet, dass** als definierte Regeln für die Erweiterung des Kommunikationsnetzes Regeln für eine Konfiguration von neuen Netzelementen vorgegeben werden.

**3.** Verfahren nach Anspruch 1 **dadurch gekennzeichnet, dass** als definierte Regeln für die Erweiterung des Kommunikationsnetzes Regeln für eine Ausrüstung von Netzelementen mit neuen Netzelementkomponenten vorgegeben werden.

**4.** Verfahren nach Anspruch 1 **dadurch gekennzeichnet, dass** definierte Regeln für die Erweiterung des Kommunikationsnetzes Regeln für die Verbindungen zwischen den Netzelementen vorgegeben werden.

**5.** Verfahren nach einem der Ansprüche 1 bis 4 **dadurch gekennzeichnet, dass** automatisch ein Arbeitsauftrag für die notwendigen Erweiterungen des Kommunikationsnetzes anhand des erweiterten Modells des Kommunikationsnetzes erstellt wird (6).

**6.** Verfahren nach einem der Ansprüche 1 bis 5 **dadurch gekennzeichnet, dass** jedes für die Durchführung des neuen Dienstes geeignete, erweiterte Modell des Kommunikationsnetzes dargestellt wird (5).

**7.** Verfahren nach einem der Ansprüche 1 bis 6 **dadurch gekennzeichnet, dass** bei Vorhandensein aller für die Durchführung des neuen Dienstes notwendigen Netzelemente, Netzelementkomponenten oder Verbindungen zwischen den Netzelementen der neue Dienst automatisch eingerichtet und aktiviert wird (8).

**8.** Netzmanagementsystem (NMS), welches zur Durchführung eines Verfahrens nach den Ansprüchen 1 bis 7 eingerichtet ist, **dadurch gekennzeichnet, dass** Mittel (PR) für eine Prüfung auf Basis eines Modells des bereits installierten Kommunikationsnetzes und für eine Prüfung anhand definierter Regeln für die Erweiterung des Kommunikationsnetzes vorgesehen sind,
- dass Mittel (MOD) zum Generieren eines um die für die Ausführung des neuen Dienstes notwendigen Netzelemente, Netzelementkomponenten oder Verbindungen erweiterten Modells des Kommunikationsnetzes vorgesehen sind, anhand dessen das installierte Kommunikationsnetz für den neuen Dienst ausgebaut werden kann (7),
- und dass Mittel (EA) zur Darstellung jedes für die Durchführung des neuen Dienstes geeigneten, erweiterten Modell des Kommunikationsnetzes vorgesehen sind.

**9.** Netzmanagementsystem (NMS) nach Anspruch 8 **dadurch gekennzeichnet, dass** Mittel (EA) für die Eingabe und Mittel (DB) für die Speicherung der definierten Regeln für die Erweiterung des Kommunikationsnetzes vorgesehen sind.

**10.** Netzmanagementsystem (NMS) nach Anspruch 9 **dadurch gekennzeichnet, dass** Mittel (ARB) für eine automatische Erstellung von Arbeitsaufträgen für die notwendigen Erweiterungen des Kommunikationsnetzes anhand des erweiterten Modells des Kommunikationsnetzes vorgesehen sind
- und dass Mittel (CON) für ein automatisches Einrichten des neuen Dienstes vorgesehen sind.
